# EUROPEAN PATENT APPLICATION

(11) **EP 3 148 239 A1**
(43) Date of publication of application: **29.03.2017**
(21) Application number: 15186536.7
(22) Date of filing: 23.09.2015
(51) Int. Cl.: H04W 16/14, H04W 72/04

(54) **METHOD FOR MANAGING AVAILABLE COMMUNICATION RESOURCE IN A COMMUNICATION NETWORK VIA NODE-TO-NODE RESOURCE-TRADING AND NODE FOR A COMMUNICATION NETWORK**

(71) Applicant: Technische Universität Dresden, 01062 Dresden (DE)
(72) Inventor: NAIK, Siddharth, 8008 Zürich (CH); JORSWIECK, Eduard, 01187 Dresden (DE); NÖTZEL, Janis, 81671 München (DE)
(74) Representative: Gulde & Partner

(57) **Abstract**

A method is described for managing available communication resource in a communication network comprising nodes (100, 200). Each node comprises a resource management (RM100, RM200) exclusively authorized for managing a part of the communication resource. The method comprises using two of the nodes (100, 200) for agreeing on a compensation and temporarily transferring, from one to the other of the two nodes (100, 200) and during a time interval, authority for managing at least a surplus portion of the managed part of the one node (100, 200) in exchange for the compensation

## Description

The current invention relates to voice and data communication, and to devices, systems, and methods for providing communication services in various forms. More particularly the current invention concerns a method for managing available communication resource in a communication network via resource-trading and a node for a communication network.

### BACKGROUND

Communication services, particularly wide range communication services also termed telecommunication services, are extremely important to businesses and individuals. Especially connections via mobile devices such as handhelds, tablets or laptops are becoming increasingly important. They offer communication links between people at any time, and at any distance no matter how far. Not only people need to communicate but also other devices such as cars or trains are exchanging information for a variety of reasons and in a variety of ways. Apart from enabling machine to machine communication and voice calls, communication services allow people to connect with each other in a variety of ways, including video conferencing, email and text messaging. They give access to an abundance of information via the World Wide Web, and at cover such basic things as emergency calls as well.

A communication device is a device through which at least some communication service can be used. A mobile communication device is any communication device that is able to send or receive information, at least, via electromagnetic waves and, optionally, via cable. A very common example of a mobile communication device is a handheld device.

Mobile communications is a part of communications where parts of the physical distance between the communicating parties are bridged via electromagnetic wave propagation which is not physically restricted via the boundaries of a cable. As mobile communications becomes more and more available, businesses as well as the private lives of people start to depend more and more on the availability of such services. At the same time more and more data gets routed through mobile networks, the data amount routed growing at an exponential rate. This increases the probability of not being able to get an important service when necessary.

A heterogeneous network is a network where different access technologies may be used for the same task and/or the different tasks, and where the choice of one access technology may not only depend on the information to be transmitted but also on the availability of the various technologies at a given moment.

Communication networks are composed of multiple such communication network nodes. Each communication network node can be connected with the rest of the network via interfaces that enable the exchange of information. Different modes of transmitting information are possible. For example these are direct communication links which are used solely between two communication network nodes. Another example is broadcast links that enable a multiplicity of communication network nodes to receive information from one communication network node. It is also possible that a communication network node other than the intended receiving communication network nodes extracts part or all of the information that is being transmitted by a communication network node (eavesdropping).

In today's communication networks there are two predominant types of interfaces: Air interface and backbone.

A backbone connection typically connects communication network nodes that exchange information amongst each other in a controlled fashion and that are all contained in one sub network which is legally owned, leased or at least operated by one communication carrier or multiple carriers under certain service provision acknowledgements. A backbone connection is typically provided via cable or microwave link. Its main characteristic is that its endpoints are physically fixed.

An air interface connects communication network nodes within one network in a dynamic fashion. Examples of air interfaces are 2G, 3G, 4G, 5G or nG. An air interface provides a flexible interface. The endpoints of a connection that is established via air interface are typically not physically fixed. In today's networks, an air interface typically connects a base station to a mobile device.

The dynamics within communication networks have become so fast that it is not possible for a human being to keep track of the establishment and breakdown of individual connections that are made, especially those made via air interface.

The role of a node in a communication network node can be either one or even both of: providing service and requesting service also called taking service. Examples of communication network nodes comprise base stations, mobile devices, radio network controllers or the backbone. Another widely accepted separation is that into the radio access network and the core network. Future mobile networks will further diversify the picture by assembling large numbers of communication network nodes into a cloud radio access network.

Some communication network nodes can provide and take service at the same time. For example a communication network node (R) may serve as a relays: It receives information from one communication network node (A) and then sends this information to another communication network node (B). The transmission from (A) to (R) may be realized on a different connection, air interface or frequency than the one from (R) to (B).

The communication network nodes, also referred to simply as nodes thereafter, are typically organized within sub-networks (each sub-network belonging to a certain communication carrier). Within these sub-networks other distinctions may exist, for example a communication network node may be a mobile device, base station or radio network controller.

Within each (sub-) network, a hierarchy may exist that allows certain communication network nodes to control the behavior of other communication network nodes.

Services may have resource requirements. Throughout this specification, services having different resource requirements are considered different from each other. The resource requirements may, for instance, concern one or more of: real time requirement, overall data amount, duration, data rate, starting time, ending time of the service, maximal amount of jitter, overall data amount, duration, data rate, air interface, bandwidth, provision of a specific end-to-end connection (for example during a meeting, a highly prioritized connection may have to be available such as to contain virtual attendees). An important parameter of a service is the time at or during which it has to be delivered. This may be specified by a starting- and an ending date, but more complicated constructions such as periodic delivery (e.g. LTE air interface available each day in July 2015 from 12:00 to 16:00) are possible.

Another set of potentially important parameters are geographic boundaries.

The electromagnetic spectrum is a scarce and limited resource and has been envisaged to maintain this status in the near and mid-term future.

Technically, airwaves are a natural resource. In practice, they are controlled by any number of national governments. The regulators grant licenses (i.e. spectrum use rights) for telecom operators to use specific chunks of spectrum in specific geographic areas. Many spectrum licenses are additionally limiting the holder to use the spectrum for only a specific technology within the acquired band. For example, the regulator can revoke a license it feels is not being used in accordance with the agency's rules.

Telecom operators are generally provided the opportunity to purchase a certain frequency in primary or secondary markets.

The limits of physics impose strict restrictions on the abilities of telecom operators. For example, it limits the amount of information that can be transmitted on a frequency band in a given amount of time.

Further limitations arise from the cost of building a telecommunication network. Such costs include not only the building of base stations, but also the rental of towers on which the antennas can be mounted, the bills for electricity being consumed by the network and the building of the backbone infrastructure that connects the base stations with the core network. This is currently the singular method of setting up such connections that allow different base stations to function together as a wireless and telecommunication network.

Each country has a telecommunication regulator, which is responsible for allocating the bandwidth of the electromagnetic spectrum, e.g. Bundesnetzagentur (BNA) in Germany, OfCom in the United Kingdom, Federal Communication Commission (FCC) in the United States. These regulators are mandated with allocating and assigning spectrum in a manner that minimizes or eliminates interference for achieving better Quality of Service (QoS) to its respective citizens.

As the distance between the various transmitter's increases, the interference caused between the different users utilizing the same frequency band generically decreases.

US Patent Application 2010/0145862 A1 addresses an automated spectrum exchange system and method by means of a centralized spectrum broker.

In the following, base station, radio network controller or radio access network are called control units, also. A control unit can be a part of multiple categories, e.g. a base station can receive service from the core network and simultaneously provide service to end user equipment.

### Summary of the Invention

According to one aspect, the current invention concerns a method for managing available communication resource in a communication network comprising nodes. Each node comprises a resource management exclusively authorized for managing a part of the communication resource. The method comprises using two of the nodes for agreeing, node-to-node, on a compensation and temporarily transferring, from one to the other of the two nodes and during a time interval, authority for managing at least a portion of the managed part of the one node in exchange for the compensation.

Since the agreement on compensation occurs node-to-node, i.e. without third parties like other nodes uninvolved in control of the agreement, temporal authority transfer becomes possible ad-hoc, in a dynamic and decentralized fashion.

In an embodiment, the method further comprises using the one node for determining the portion using an expectation value for the respective managed part to remain unused in the time interval. Preferably, the nodes belong to a same hierarchy level of the communication network.

The compensation may be negotiated prior to agreeing thereon.

The compensation may be negotiated prior, during or after the transaction.

The communication resource may comprise at least one of: frequency bands, code books, beamforming vectors, channel inversion matrices, interleavers and decoding strategies.

According to one further aspect, the current invention concerns a node for managing available communication resource in a communication network, the node comprising a resource management exclusively authorized for managing a part of the communication resource. The resource management is adapted for agreeing with another node on a compensation for temporarily transferring, from the node to the other of the two nodes and during a time interval, authority for managing at least a portion of the managed part of the one node in exchange for the compensation.

In an embodiment, the node is configured for determining, at a time, a number of users that are currently connected to the node and estimating an expected number of users that will be demanding service during the time interval.

Estimating the expected number may comprise taking into account various service classes and/or an expected number of handover requests to be expected from other nodes.

The Node may be configured for determining an expectation of surplus frequency bands or sub-bands during the time interval.

The Node may be configured for determining a probability density function corresponding to the surplus of the frequency bands.

The Node may be configured for using the surplus of the frequency bands over the time interval for assigning a probability density function of supply for this surplus.

The Node may be configured for converting the probability density function into a vector of price relative to an assigned price to a mean of the probability function.

The Node may be configured for announcing availability of the surplus during the time interval and the vector via a channel of a virtual exchange platform.

The Node may be configured for further announcing a validity interval for the vector during which the vector stays valid.

### FIGURES

Figure 1 shows an exemplary embodiment of the invention and
Figure 2 shows a further exemplary embodiment of the invention.

### DETAILED DESCRIPTION

An exemplary embodiment of the current invention addresses a need that has arisen for an improved resource exchange platform that provides for an enhanced liquidity, asset descriptions, and diversification for the involved participants, namely across operators.

An exemplary embodiment of the invention relates to a system and to a method for transferring resources (e.g. radio resource blocks) from one operator's base station, radio network controller or radio access network to another operator's base station, radio network controller or radio access network. In one particular embodiment of the method the transfer of resources occurs in a local neighborhood of the original operator's base station, radio network controller or radio access network.

The method and/or the system may comprise using an interface between the control units and a program (or processor, or computer, or computing unit) that transmits bids and offers to other control units via the interface The method and/or the system may comprise using an interface between the program or/and the control unit. The method and/or the system may comprise using an interface between the end users and the control units. The method and/or the system may comprise using an interface between the control units and core network. The method and/or the system may comprise using an interface between the core network and sub-ledger of the public land and mobile network (PLMN) and using a processor for processing trades at the sub-ledger of the PLMN. The method and/or the system may comprise using an interface between processors of multiple PLMNs.

Such a system and/or method will be advantageous, e.g., in situations where the transmission between network nodes is mostly line of sight and disturbances arising e.g. from multipath propagation are relatively insignificant to the line of sight components.

In accordance with an embodiment of the present invention, tradeable communication resource comprises, e.g.,
i. frequencies,
ii. code books,
iii. beamforming vectors,
iv. channel inversion matrices,
v. interleavers and/or
vi. decoding strategies.

Trading may particularly occur in a market environment. This substantially eliminates, or at least reduces, disadvantages and problems associated with conventional exchange approaches for spectrum related transactions.

According to a further exemplary embodiment of the present invention, a method is provided for facilitating trades involving radio resources. The method of the further exemplary embodiment comprises transmitting information associated with radio resource assets from one control unit to another control unit of another operator along with communicating with an end user that consumes the data. Advantageously but not necessarily, the transmission mechanism can be accessed by any control unit (not only the seller or an addressed potential buyer) in order to identify a potential radio resource asset.

In one particular exemplary embodiment of the invention, the method further comprises utilizing the data communicated by the control unit in a registration process. The registration process could be utilized for more involved trades e.g. a swap, an optional lease, an optional sale, an optional transfer, or an optional purchase of the selected radio resource asset. Examples of such trades could be frequency spot exchanges, forwards, futures contracts, options (path dependent and non-path dependent), swaps etc.

In another particular exemplary embodiment of the invention, a virtual exchange platform is provided for facilitating trades involving radio resource assets. The virtual exchange platform is configured for providing a transmission mechanism to transmit information associated with at least one radio resource asset that includes rights to be afforded to a holder of the radio resource asset. The transmission mechanism can be accessed by any control unit for any operator in a particular local neighborhood. Optionally, the transmission mechanism may be utilized to secure a radio resource asset at a designated time interval in the future (similar to a forward or futures contract).

The present invention provides a number of technical advantages. For example, according to one embodiment of the present invention, a virtual exchange platform is provided that includes a transmission mechanism which can aggregate the radio resource assets (if they are suitable for aggregation via the physics of wireless communication) into a single element. This greatly expedites and facilitates the trading. The aggregation of the resources can be specified via the language utilized in the contracts, e.g. the resources could be frequencies, non-consequent frequency bands, time point, time interval, energy utilization etc.

The transmission mechanism further allows for a malpractice detection mechanism to verify the quality and availability of radio resource assets and to facilitate the identification of appropriate counterparties who wish to engage in a transaction, to permit negotiation of the terms and conditions with respect to price and spot or forward term structure, and to facilitate electronic consummation of key economic considerations.

The current invention overcomes the necessity of additional physical infrastructure including the need of a physical exchange. According to exemplary embodiments of the invention, legacy control units in a telecommunication network are leveraged to function as measurement devices.

It is within the scope of the invention to attribute the role of the measurement device to other network nodes, such as for example end user devices or other equipment that is equipped to carry out the task of detecting violations of spectrum licenses. The reports of such measurement devices allow for a verification process to take place, such as verifying that a frequency band has been cleared by its former user.

Then, in the case a telecommunication operator would wish to deploy additional equipment for enhanced detection of spectrum access right violations, this can be done always and spectrum hogging becomes dis-incentivized.

Furthermore, in some exemplary embodiments of the invention the virtual exchange informs a prospective buyer or seller about any pertinent spectrum trade related information. This could include simple spectrum asset descriptions or the ability to identify a control unit owning a particular radio resource asset of particular spectrum in a chosen area, for instance. Other enhancements can be readily accommodated as software, middleware or hardware add-ons.

Yet further, some exemplary embodiments of the invention can be utilized in order to facilitate and expedite real-time communications between all relevant control units and/or provide verifiable (electronics) documentation of all communications, while being appropriate for assisting in the regulatory verification process (e.g. via end of day financial settling). This can be achieved, e.g., by pushing the creation of first-stage legal documents towards a central ledger of the operator and eliminating corresponding complexity from the control units.

Even yet further, some exemplary embodiments of the invention allow for control units that have radio resource allocation algorithms to push the efficient frontier (Pareto boundary) of their resource allocation sets via availing of radio resource assets from control units of other operators, for increasing QoS, reducing load and satisfying energy constraints. Hence the control units may avail marginally riskier radio resource allocation strategies. The risk can be hedged in the form that the spectrum related trades get cleared from the central ledger of the operator on an end-of-day basis.

In the following, another exemplary embodiment of the invention is described. For the sake of simplicity only, resources are restricted to being frequency bands in another exemplary embodiment. But aspects of another embodiment can be applied to embodiments of the invention not requiring resources to be restricted to being frequency bands.

According to the another exemplary embodiment, the control unit has the ability to check the number of users that are currently connected to it and estimate the expected number of users that will be demanding service over a particular time interval at least longing into the future for various service classes and/or the expected number of handover requests to be expected from neighboring control units (of the same operator and/or of different operators). Based on this estimate or these estimates, the control unit can, for a given probability, build an expectation of surplus (unneeded) frequency bands or sub-bands (henceforth denoted as frequency bands) during the time interval. Furthermore the control unit can build a probability density function corresponding to the surplus of the concerned frequency bands.

Based on the surplus of the concerned frequency bands over the time interval the control unit can assign a probability density function of supply for this surplus. This probability density function can be converted into a vector of price relative to an assigned price to the mean of this discrete probability function.

This vector can then be announced via a dedicated or non-dedicated channel of the virtual exchange platform at time to and signifying availability of the surplus during the time interval (i.e. from starting time t1 of the time interval to an ending time t2 of the time interval). The vector can stay valid for a deviating time interval, e.g. from of a certain time t0 before t1 as long as there is enough time for a handover of frequency bands from one control unit to a another control unit, particularly from a control unit of one operator to a corresponding control unit of another operator.

The (optionally deviating) time interval during which the vector stays valid may be governed and calculated by taking into account that the respective other control unit might want to perform measurements on the offered spectrum before entering a trade. Another parameter that could determine the definition of the specific times (e.g. within the protocol) is the amount of time (duration) required for performing a hard handover for a user. The hard handover can be performed after successfully interference temperature related sensing of the frequency acquired by the control unit to which the user will be connected after hard handover.

In one exemplary embodiment of the invention, the communication protocol is organized as follows: A control unit has surplus frequency bands. The control unit can release this surplus to another control unit without having an impact on the control unit's quality of service (QoS) requirements. Hence the control unit can offer the surplus frequency bands to neighboring control units, e.g. from other operators in exchange for a compensation.

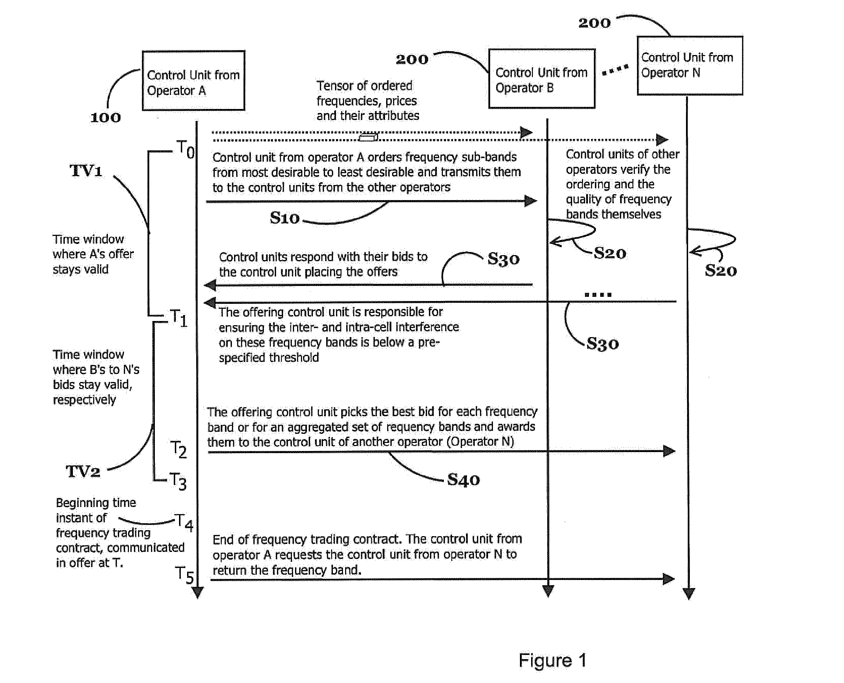

In the following a method according to an exemplary embodiment of the invention is described which the control unit and the neighboring control units may perform. The method is exemplarily depicted in figure 1.
i. In a step S10, the control unit 100 orders its frequency sub-bands from the most desirable to the least desirable (as seen from its own perspective) and transmits them at a time T0 to control units 200 from the other operators. For example the lower frequency bands are often much more desirable due to their robust propagation properties. Another physical property entering the calculation could be the fact that frequencies around 60GHz are strongly absorbed by oxygen. Also, more specific properties such as buildings shadowing a communication link, or rain, may severely influence the local value of a frequency band. For the purpose of ordering the frequencies sub-bands, additional steps involving specific measurements and other network nodes that are within reach of node 100 or other nodes associated to node 100 may be used.
ii. These ordered frequency sub-bands serve as an indicator for the control units 200 from other operators as the more and less desirable frequency bands. The more desirable frequency bands will come with a higher price tag as compared to the others.
iii. The control units 200 of other operators verify step S20, for themselves this ordering and the quality of each individual bands such that they have an independent assessment of the frequency bands. For that matter, they may additionally make use of blind estimation mechanisms and an abundance of available other network nodes like end user devices, but also sensors on base stations, cars, trains, or even traffic lights, some of which may interact with the control units 200 such as to allow spectrum sensing.
iv. The control units 200 from the other operators have a finite time interval TV1from of T0 for responding to the received offer if they are interested in leasing these frequency bands during a certain specified time interval in the future.
v. These control units 200 interested in leasing respond, before time T1 at which the time interval TV1 ends, in step S30 with their bids to the control unit placing the offers. The response has a further time interval TV2 during which the leasing interest responds remains valid, for example. The highest bid, if deemed valuable will be accepted in Step S40 for each (or aggregated) frequency bands.
vi. Then the offering control unit is responsible for ensuring that inter- and intra-cell interference on these frequency bands is below a pre-specified threshold. The control units from the other operators have a method to verify this and post/lodge a complaint about foul-play or non-delivery of the announced quality by end of day settling on each conducted transaction.
vii. The offering control unit sends a message that it has cleared the concerned frequencies and the acquiring control unit then can utilize these frequency bands in any desired way in the time interval.
viii. Then the acquiring control unit has to return the frequency band to the original control unit, while ensuring that the inter- and intra-cell interference on these frequency bands is below a pre-specified threshold. The original offering control unit has the ability to verify this and post/lodge a complaint about foul-play or non-delivery of the announced quality by end of day settling on each re-acquired frequency band.

The method also allows for seeking or hunting of desired frequency sub-bands from control units of neighboring operators.

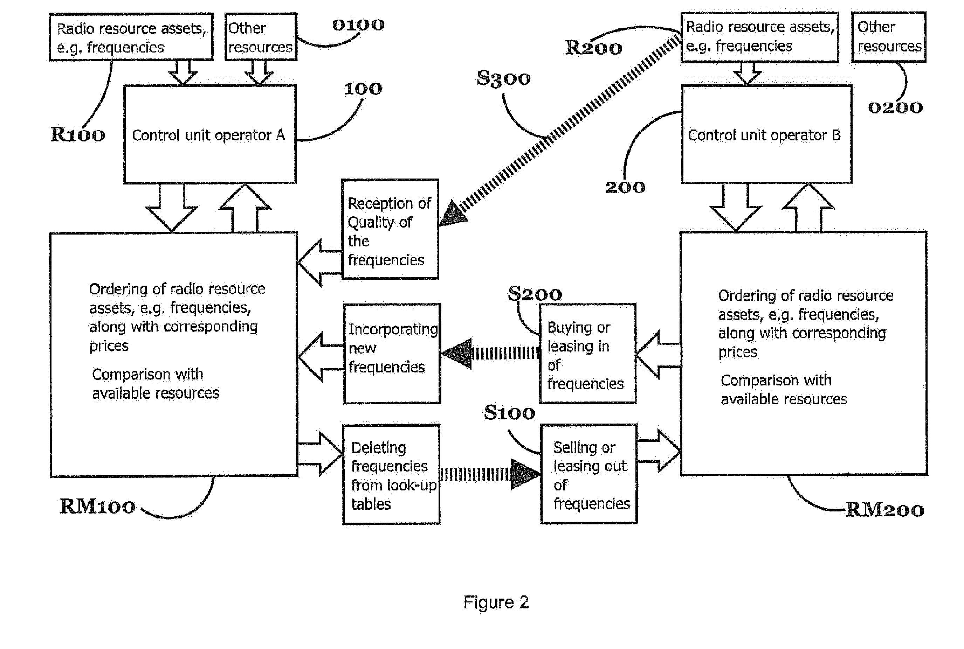

Figure 2 shows a further exemplary embodiment of the invention. Exemplary two nodes 100, 200 of different operators covering a same geographical region are depicted. More nodes may be further covering the same geographical region.

Node 100 has radio resource assets R100 and other resources 0100. Similarly, node 200 has resource R200 and other resources 0200. As well both nodes 100, 200 operate a resource management RM100, RM200. Each resource management RM100, RM200 orders radio resource assets which it is exclusively authorized to manage along with prizes and compares available resources. This forms, in this embodiment, the basis for trading resources interactively. Trade occurs, with node 200, in interrelated steps S100 and S200 which concern buying a resource and selling a resource. Optionally, qualities of the radio resource assets of node 200 are received by node 100 in step S300.

In a further exemplary embodiment, the control units are required to satisfy certain specific quality of service (QoS) and latency requirements. Then, for example, it might want to obtain the channel inversion matrix for the desired frequency sub-bands, the beamforming vectors, interleaving code and a more holistic package, e.g. in the case of channels, which are governed purely by line of sight and do not have significant contribution from multipath. Since many of these matrices and vectors are already computed by the control unit leasing the frequency, these matrices and vectors can be sold out at a higher price packaged with the frequency. This would help is reducing latency of bringing the desired frequency sub-band into active use and deploying it to end user equipment. Furthermore, such pre-computed solutions would further assist inter-frequency, inter-air interface handovers via fast break before make mechanisms. This would further enhance resource utilization and enable higher throughputs.

In another exemplary embodiment of the invention the control unit can unicast, multicast or broadcast the offers for selling frequency bands to control units in an appropriately defined local geographic neighborhood of itself. Hence, a local exchange platform is construed which does not require to be physically located but allows for construction by distributed implementation.

The particular local geographic neighborhood simplifies interference management, namely clearing users from these surplus frequency bands (which might sometimes be almost empty up until the handover point). The clearing mentioned here, implies reassigning users currently using the frequency band or bands, which are on sale or lease to other frequency bands as part of staple radio resource allocation of the operator offering the frequency bands.

The receiver architecture does not need to conform to any particular standard. Nonetheless, the exemplary embodiments described strongly benefit from a certain standardized form of QoS support at the receiver. The system includes a combination of hardware, middleware or software, which enables the receiver to specify to the control unit that it received the desired QoS as was demanded on the newly acquired frequency sub-band.

The control unit can handover more than "purely" frequency bands to control units of other base stations.

This is due to the fact that the control unit that wants to handover the surplus resources already has access to the potential beamforming vectors, channel inversion sub-matrices and code books for these frequency bands. This is at least beneficial in the following two cases.
i. Both the control units are collocated.
ii. The channel is almost completely governed by line of sight and the contribution from multipath can be ignored.

The prices vector corresponding to the set of resources mentioned in the previous point would be expected to be marginally more expensive than the prices assigned to pure frequency band resources.

The handover, local exchange platform and local geographic vicinity need to be defined for these set of resources as was defined for pure frequency band resources.

It is an advantage of the current invention that there is no central marketplace required to execute transactions. That is, the invention realizes a virtual node-to-node exchange platform, connecting a buyer and a seller on a trade-by-trade basis. The combination of the involved control units forms the virtual (local) exchange for radio resource assets. The control units can store the profiles of neighboring control units from other operators associated with being buyers and sellers. The control unit is at regular intervals synchronized with a portal of the operator for solve data accuracy, monitoring functions, or record keeping as explained more fully below. During the period between synchronizations the concerned risks are warehoused by the telecommunication operators involved.

In some exemplary embodiments of the invention, any control unit who is confronted with an issue that involves the use of radio resource assets (over and beyond that performed by one's own operator) could readily access control units from other operators in the vicinity via the virtual exchange in order to address its issue. The architecture allows the control unit to immediately identify the availability of a given radio resource asset in the local neighborhood and recognize an associated price estimate for the targeted asset. Moreover, such a control unit can readily identify a supply of willing sellers bidders for any available radio resource assets. Hence any control unit interested in buying, selling, transferring or leasing spectrum rights could benefit from the invention by enabling better addressing of their specific radio resource asset right endeavors. Bidding associated with the provided architecture could be provided with an indication of "interest" (options analogy) and "firm commitment" (spot market and forward and futures contracts analogy), the latter of which may be generally supported by suitable financial backing, as explained more fully below.

The present invention facilitates and expedites transactions to buy, sell, lease, transfer (inclusive of swaps) and utilize wireless spectrum. This may be achieved by utilizing our iterative communication protocol which offers a searchable, comprehensive listing of physical inventory. Moreover, the data retrieved from the virtual exchange is capable of facilitating real-time electronic negotiations between the buyer and the seller. Hence, the exchange platform may verify (utilize blind estimation, e.g. independent component analysis (ICA) or dependent component analysis (DCA)) buyer and seller information in order to determine whether each control unit is qualified and authorized to participate in such an endeavor. During this registration process, one or more profiles are generated for each buyer and seller.

The invention may also offer some accurate pricing for radio resource assets and provide any terms and conditions documents for radio resource rights for the associated transaction. Using one or more of the provided components, the system can facilitate formation of an electronic arrangement, acceptance from both parties and execution of the transaction terms. Concurrently, the system is capable of performing auditing functions (with respect to incoming and outgoing data) in order to record information that can fulfill streamlined regulatory compliance requirements as mandated by the regulator.

The invention further provides an open and neutral virtual exchange for facilitating the transfer of any commodity associated with radio resource assets. The invention offers a true intermediary that offers equal and unbiased opportunities for all control units wanting to participate in the transaction. This is due to the fact that each involved control unit is offered a chance to obtain the desired radio resource asset solely constrained by interference constraints and financial market parameters as mandated by the contract.

The invention insulates the PLMNs political lobby at least to a first order from influencing the ownership interest in the underlying radio spectrum rights. Therefore the PLMN is insulated from any pressure to influence any outcome associated with the transactions. The invention avoids various such unfair dealings via an end-of-day settling protocol combined with means of checking if what was delivered was what was promised in the contract. It aims towards providing an unbiased and evenhanded marketplace for frequency and other radio resource assets trades.

In some exemplary embodiments, the neighboring control units observe the announced price vectors for the radio resource assets and respond with their individual bids.

In some other exemplary embodiments, the control units requiring additional resources can also post bids requesting pure or bundled frequency band resources to control units in the vicinity.

The bids and offers which are closest to each other may get cleared as long as the bids and offers stay valid during the concerned time period. By cleared it is implied that a handover of pure or bundled frequency resources is initiated by the control unit of one operator to the control unit of another operator. The handover implies explicitly the returning of resources to the offering control unit.

In an exemplary embodiment, the method for clearing these frequency resources works as follows. The control unit offering the frequency resources checks with the first pre-defined number of tiers of interfering control units that this particular frequency resource is primed for handover.

The larger the number of pre-defined tiers of interfering control units, the better the interference temperature requirements can be satisfied. Hence, it can be specified in the legal trading contract that a minimum of one of the following two caveats be fulfilled:
i. The interference temperature is below a certain predefined threshold.
ii. A certain pre-defined number of interfering tiers of control units have released the frequency band, which is being transferred to the control unit of another PLMN.
iii. Radio resource maps provide data which shows that the radio resource can be used in this neighborhood.

For being primed for handover the control unit of a further exemplary embodiment initiating the handover has to ensure that the interference temperature on the concerned frequency resource is below a certain threshold at time point t0 and that it is expected to be under a certain another threshold (tighter, i.e. smaller than the previous efforts) from time point t1 to time point t2.

Hence in yet some other exemplary embodiments of the invention it is ensured that the interference temperatures lies below these two threshold. One embodiment of these involves blind estimation.

A communication channel can then be established to communicate to the receiving control unit of the other operator, that the concerned frequency resource is being transferred.

Technical and non-technical break clauses may be defined so that both the offering control unit and the bidding control unit can terminate.

Examples of technical break clauses comprise.
i. Interference temperature requirements not met by offering control unit.
ii. Users not converging on a particular designated frequency band, where the designated frequency band was the radio resource asset that was traded from one control unit to another.
iii. Interference temperature requirements not being fulfilled post the time interval of the contract has expired.

Examples of non-technical clauses comprise.
i. Credit clauses not being met by the operator of the control unit involved as a buyer in the trade.
ii. Interest rate alterations having occurred between the trade time and the settling time causing a change in the price adversely affecting the operator of the control unit involved in the trade as a seller.

To summarize some of the advantages of the present invention:
It provides a marketplace for buyers and sellers to transact their spectrum right deals in an optimal fashion.

The exercising of the right of qualified participants (telecommunication operators) in the electronic exchange to investigate commercial opportunities and/or assess the economic value of spectrum assets held in inventory may be achieved. The buyers and sellers are also offered the opportunity to execute commercial transactions in a timely and reliable manner. Furthermore, the characteristics of the marketplace offered by the system meet the FCC standard that required that marketplace structures, practices, and disclosures be fair, transparent and effective.

The virtual exchange is a trading architecture that facilitates the purchase, lease and sale of one or more radio resource assets. It consists of the existing control units and a transmission mechanism based on protocols identifying the related transactions.

The virtual exchange need not be owned or operated by an entity; even no new wireless engineering infrastructure is required. A connection may be present between the virtual exchange platform and any other relevant exchange through the sub-ledger of the operators or otherwise.

The virtual exchange can be connected to a real exchange. In one particular embodiment this is via the sub-ledger of the telecom operator. Hence, this enables the telecom operator to feed purchase and sell related information to the financial markets. These buy and sell related information can be segregated into transactions necessary to run the business and transaction to benefit from surplus, in turn leading to a financial market indicator for benchmarking the provisioning of the QoS to its customers. This will in turn (post acceptance from the market) be in a position to be a fundamental drivers of the equity price of telecom operator firms.

This connection between the virtual exchange platform and a real exchange will need to be in compliance with the financial and telecommunication regulators.

## Claims

1. Method for managing available communication resource in a communication network comprising nodes (100, 200) each node comprising a resource management (RM100, RM200) exclusively authorized for managing a part of the communication resource, the method comprising: using two of the nodes (100,200) for agreeing, node-to-node, (S30, S40) on a compensation and temporarily transferring, from one to the other of the two nodes (100,200) and during a time interval, authority for managing at least a portion of the managed part of the one node in exchange for the compensation.

2. Method of claim 1 or 2 further comprising: using the one node for determining the portion using an expectation value for the respective managed part to remain unused in the time interval.

3. Method of claim one of the preceding claims further comprising negotiating the quality of the portion to be transferred prior to transferring it.

4. Method of claim one of the preceding claims further comprising negotiating the compensation during or after transferring the portion.

5. Method of claim one of the preceding claims wherein the communication resource comprises at least one of: frequencies, code books, beamforming vectors, channel inversion matrices, interleavers and decoding strategies.

6. Node (100, 200) for managing available communication resource in a communication network, the node comprising a resource management (RM100, RM200) for managing a part of the communication resource, the resource management (RM100, RM200) being adapted for agreeing with another node on a compensation for temporarily transferring, from one to the other of the two nodes (100,200) and during a time interval, authority for managing at least a portion of the managed part of the one node in exchange for the compensation.

7. Node of claim 6 wherein the node is configured for determining, at a time, a number of users that are currently connected to the node and estimating an expected number of users that will be demanding service during the time interval.

8. Node of claim 7 wherein estimating the expected number comprises taking into account various service classes and/or an expected number of handover requests to be expected from other nodes.

9. The Node of claim 7 or 8 further configured for determining an expectation of surplus frequency bands or sub-bands during the time interval.

10. Node of claim 9 wherein the node is configured for determining a probability density function corresponding to the surplus of the frequency bands.

11. Node of claim 10 wherein the node is configured for using the surplus of the frequency bands over the time interval for assigning a probability density function of supply for this surplus.

12. Node of claim 11 wherein the node is configured for converting the probability density function into a vector of price relative to an assigned price to a mean of the probability function.

13. Node of claim 12 wherein the node is configured for announcing availability of the surplus during the time interval and the vector via a channel of a virtual exchange platform.

14. Node of claim 13 wherein the node is configured for further announcing a validity interval for the vector during which the vector stays valid.
